# EUROPEAN PATENT APPLICATION

(11) **EP 4 485 732 A1**
(43) Date of publication of application: **01.01.2025**
(21) Application number: 23182664.5
(22) Date of filing: 30.06.2023
(51) Int. Cl.: H02J 3/00, H02J 3/14, H02J 3/32, H02J 3/38

(54) **A COMPUTATIONAL METHOD AND A SYSTEM FOR THE MANAGEMENT OF ENERGY RESOURCES PROVIDED IN A NEIGHBOURHOOD**

(30) Priority: 29.06.2023 PT 2023118772
(71) Applicant: Instituto Superior de Engenharia do Porto, 4249-015 Porto (PT)
(72) Inventor: ALMEIDA DO VALE, ZITA MARIA, PORTO (PT); OLIVEIRA GOMES, LUÍS FILIPE DE, PORTO (PT); SILVA FARIA, PEDRO NUNO DA, PORTO (PT)
(74) Representative: do Nascimento Gomes, Rui

(57) **Abstract**

The present disclosure is within the area of energy resources management, within an energy community the energy community comprising several consumers and energy providers, wherein the energy providers provide energy to the consumers, such that an electrical energy generation is shared between the consumers. The present disclosure addresses the efficient management of consumers and providers through an efficient management of resources which ensures privacy and security. Energy resources (100) comprise a plurality of energy providing elements (10) and a plurality of energy consumption elements (20), the energy providing elements comprising energy generation elements (20a) and energy storage elements (20b). The neighbourhood (200) is defined as a delimited geographical area comprising a set of geographical locations whose distance from a given point is not more than a distance value.

## Description

### FIELD OF THE DISCLOSURE

The present disclosure is within the area of energy resources management, within an energy community the energy community comprising several consumers and energy providers, wherein the energy providers provide energy to the consumers, such that an electrical energy generation is shared between the consumers. The present disclosure addresses the efficient management of consumers and providers.

### PRIOR ART

Energy management solutions within an energy community are known in the art, and have been developed especially throughout the last decade.

The concept of energy communities is still rather new and is evolving as the laws in each country are evolving. In the past, having a distributed generation installation that belongs to a set of consumers as it is located in a shared property was not allowed. Today it is being allowed with different and evolving technologies. Moreover, it is possible for a community to manage the consumption resources in order to increase the energy availability of the distributed generation, assuming that it is not profitable to discard this energy back to the power system.

Typical examples are specific for the field of private renewable energy installations, where the energy generation is limited and not on demand. These may include the efficient usage of electrical energy converters, based on renewable energies, by suppressing demand and sharing electrical storage facilities through an energy grid, as a way to save power for subsequent use. Several energy consumers, forming the energy demand, exist. The management of consumption, available storage and charging of storage based on renewable based energy generation is a typical example of energy management.

One or more controllers determine the suppression of demand with regard to the available storage and charging capacity of that storage.

These or several other types of energy management solutions within an energy community have the drawback that they do not provide means for a highly intelligent and efficient management of resources, in a way that ensures privacy and security. The present disclosure innovatively tackles these issues.

### SUMMARY OF THE DISCLOSURE

The present disclosure comprises a computational method for the management of energy resources provided in a neighbourhood and thus defining an energy community.

The energy resources comprise a plurality of energy providing elements and a plurality of energy consumption elements, the energy providing elements comprising energy generation elements and energy storage elements.

The neighbourhood is defined as a delimited geographical area comprising a set of geographical locations whose distance from a given point is not more than a distance value.

The method comprises:
a) calculating an expected value of energy providable by the energy providing elements during a predefined period of time and an expected value of energy consumed by the energy consumption elements during the predefined period of time,
b) based on the expected value of energy providable during a predefined period of time, which comprises an expected value of energy generated by the energy generation elements during the predefined period of time and a value of energy stored in the energy storage elements and providable during the predefined period of time, determining a value of energy available during a predefined period of time,
c) based on the said value of energy available and the said expected value of energy consumed, controlling in real-time the actual consumption of the energy consumption elements to adjust the actual value of energy consumed during the predefined period of time to the value of energy available in that period of time.

### DESCRIPTION OF FIGURES

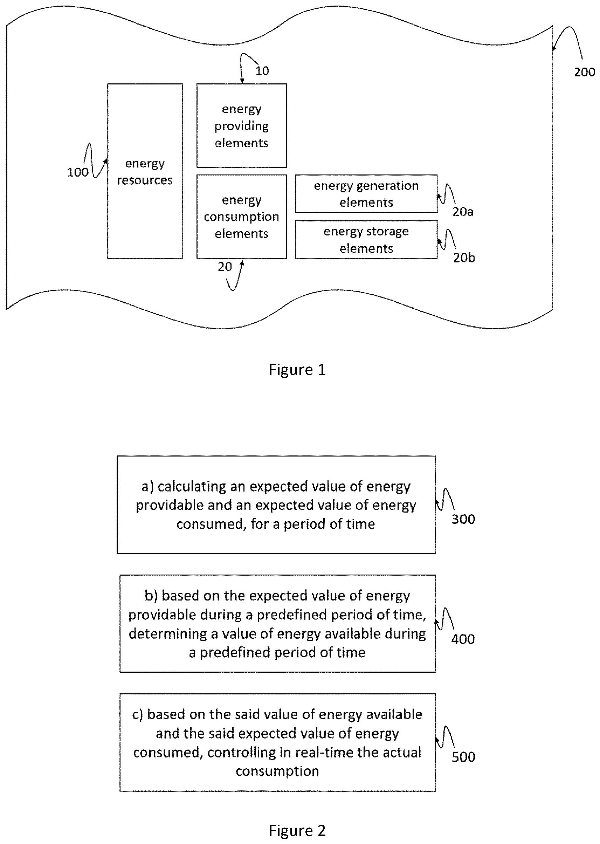

Figure 1 - a representation of elements part of the method of the present disclosure, wherein energy resources (100) comprise a plurality of energy providing elements (10) and a plurality of energy consumption elements (20), the energy providing elements comprising energy generation elements (20a) and energy storage elements (20b). The neighbourhood (200) is defined as a delimited geographical area comprising a set of geographical locations whose distance from a given point is not more than a distance value.
Figure 2 - a representation of the steps of the method of the present disclosure, in particular a) calculating an expected value of energy providable by the energy providing elements during a predefined period of time and an expected value of energy consumed by the energy consumption elements during the predefined period of time (300), b) based on the expected value of energy providable during a predefined period of time, which comprises an expected value of energy generated by the energy generation elements during the predefined period of time and a value of energy stored in the energy storage elements and providable during the predefined period of time, determining a value of energy available during a predefined period of time (400), and c) based on the said value of energy available and the said expected value of energy consumed, controlling in real-time the actual consumption of the energy consumption elements to adjust the actual value of energy consumed during the predefined period of time to the value of energy available in that period of time (500).

### DETAILED DESCRIPTION

The method of the present disclosure allows to, in an innovative manner, forecast energy consumption and generation and introduce the technological tools which enable the use of models for energy distribution and the implementation of business models involving benefits distribution and tariff simulation. Moreover, it includes controllable electricity consumption appliances which participate in a flexible energy management.

The flexibility of the solution of the present disclosure allows to provide a set of related advantages, in particular the participation in electricity market opportunities regarding flexibility and solar generation aggregation, the selection of electricity dynamic tariffs or the distribution of profits according to the total consumption share or flexibility contribution. Still, these advantages arise from higher level implementations which do not reduce the technological innovation of the method of the present disclosure.

The method may further comprise defining sub-groups of elements part of the energy community, each sub-group comprising at least one energy providing element and one energy consumption element,
the method further comprising that a value of energy providable by at least one energy providing element of a first sub-group during a period of time is directly attributed to the consumption of an energy consumption element of the same first sub-group during a period of time,
wherein each element is provided in a different geographical location.

The method of the present disclosure thereby enables a high flexibility which, in turn, provides the ability to exchange energy between several consumers and/or providers within a same neighbourhood but in different locations of such neighbourhood. In a higher level implementation, one can say that the method enables peer-to-peer energy transactions among neighbours.

The elements constituting sub-groups may change during a period of time, thereby enhancing said flexibility.

Steps a) to c) may be sequentially performed in real-time, whereby each step is performed immediately after the previous step.

The method may further comprise the definition of a tariff associated with the providing of energy by the energy providing elements during a period of time.

The method may further comprise the definition of a first tariff associated with the providing of energy by the energy providing elements of a first group during a period of time to energy consumption elements of the first group and the definition of a second tariff associated with the providing of energy by the energy providing elements of a second group during a period of time to energy consumption elements of the first second.

The method may further comprise the definition of at least one energy generation tariff associated with energy provided and originated from one or more energy generation elements and of at least one energy storage tariff associated with energy provided and originated from one or more energy storage elements.

The distance value may be of 5 m, 20 m, 10 m, 50 m, 100 m, 500 m, 1 km, 2 km, 5 km, 10 km, 20 km or 30 km.

The method may comprise
determining the expected value of energy providable by the energy providing elements during a predefined period of time and the expected value of energy consumed by the energy consumption elements during the predefined period of time based on
a history set of values of energy providable by the energy providing elements and of energy consumed by the energy consumption elements,
a number of energy providing elements and energy consumption elements, and
time and date,
and, optionally, wherein values of energy providable by the energy providing elements and of energy consumed by the energy consumption elements are directly obtained from energy meters associated with the energy providing elements and the energy consumption elements.

Moreover,
the expected value of energy providable by the energy providing elements during a predefined period of time,
the expected value of energy consumed by the energy consumption elements during the predefined period of time,
the value of energy available during a predefined period of time,
information on the control in real-time of the actual consumption of the energy consumption elements,
may be stored locally, thus not being transmitted to a remote computational processor.

Controlling in real-time the actual consumption of the energy consumption elements to adjust the actual value of energy consumed during the predefined period of time to the value of energy available in that period of time
may comprise defining a limit to the consumption of one or more of the energy consumption elements and/or shutting down the operation of one or more of the energy consumption elements.

The present disclosure may further comprise a method for the local management of energy resources provided in a neighbourhood and thus defining an energy community, wherein this method comprises the method of the present disclosure which was previously described, in any of its forms, in a computational system, the computational system comprising a one or more of processors and being provided within the neighbourhood.

The present disclosure may further comprise a computational system for the management of energy resources provided in a neighbourhood. This system comprises computational means configured to implement the method for the management of energy resources provided in a neighbourhood and thus defining an energy community or the method for the local management of energy resources provided in a neighbourhood and thus defining an energy community.

The present disclosure may further comprise a computer program product comprising executable instructions for performing the method for the management of energy resources provided in a neighbourhood and thus defining an energy community or the method for the local management of energy resources provided in a neighbourhood and thus defining an energy community.

The present disclosure may further comprise a non-transitory storage media including program instructions executable to carry out the method for the management of energy resources provided in a neighbourhood and thus defining an energy community or the method for the local management of energy resources provided in a neighbourhood and thus defining an energy community.

The present disclosure thus includes a system and a method which allow the management of the energy resources and appliances in an energy community.

The system may include both hardware for computational calculations and data storage, and such hardware may be configured with software for intelligent management in single-board computers, and business models applications.

The method and/or the system may consider that a set of electricity consumers has shared electrical energy generation installation (for example a block of apartments has a solar photovoltaic generation installation in the rooftop) where the calculation of benefits distribution must be determined.

Moreover, efficient energy management may be implemented in order to take the most profit if the available generation through the actuation in specific consumption appliances.

The method of the present disclosure may be implemented locally and/or based on single-board computers, thus with resort to one or more controllers provided within the neighbourhood. Thus, one or more controllers provided in the system may also be single-board computers. In the same way, data obtained according to the present method may also be locally stored.

By providing local computation and data storage, avoiding the use of cloud over internet, the solution of the present disclosure increases data privacy and security.

Moreover, using heuristic approaches for optimization allows to locally run the optimization in single-board computers.

The solution of the present disclosure also allows the user to have a simple interface, locally available. This interface allows to parameterize the flexibility of each appliance and to monitor the energy usage in each moment as well as the benefits in the end of the month.

In addition, and as referred, data obtained according to the present method may also be locally stored, e.g., in a local memory.

Such data may be configured in a JSON file.

In the same way, reading periods and storage periods may also be configured in a JSON file.

Several types of communication between elements of the method or the system can be done wirelessly or in a cabled form, for instance according to the protocols 802.11 (Wifi) and/or RS-485.

In various embodiments, any of the the methods, the system and/or elements thereof include components for performing at least some of the example features and capabilities of the described methods, whether by means of hardware components (such as memory and/or processor), software, or any combination thereof.

In various embodiments, the system may comprise a microcontroller, with the ability to receive external data via inputs and provide triggering of outputs, based on configured rules and/or predefined programming.

An article for use with any of the methods and/or the system such as a pre-recorded storage device or other similar computer-readable medium including program instructions recorded thereon, or a computer data signal carrying computer-readable program instructions may direct a device to facilitate implementation of the methods described herein. It is understood that such apparatus, articles of manufacture and computer data signals are also within the scope of the present disclosure.

A "computer-readable medium" is understood as any medium that can store instructions for use or execution by a computer or other computing device, including read-only memory (ROM), erasable programmable read-only memory (EPROM) or flash memory, random access memory (RAM), a portable floppy disk, a hard disk drive (HDD), a solid state storage device (e.g., NAND flash or synchronous dynamic RAM (SDRAM)), and/or an optical disc, such as a Compact Disc (CD), Digital Versatile Disc (DVD), or Blu-Ray ^{™} Disc.

As will be evident to a person skilled in the art, the present disclosure should not be limited to the embodiments described herein, with a number of changes being possible, which remain within the scope of this disclosure.

Of course, the preferred embodiments above described are combinable in the different possible forms, the repetition of all such combinations being herein avoided.

## Claims

1. A computational method for the management of energy resources provided in a neighbourhood and thus defining an energy community, the energy resources comprising a plurality of energy providing elements and a plurality of energy consumption elements, the energy providing elements comprising energy generation elements and energy storage elements,
the neighbourhood being defined as a delimited geographical area comprising a set of geographical locations whose distance from a given point is not more than a distance value,
the method comprising:
a) calculating an expected value of energy providable by the energy providing elements during a predefined period of time and an expected value of energy consumed by the energy consumption elements during the predefined period of time,
b) based on the expected value of energy providable during a predefined period of time, which comprises an expected value of energy generated by the energy generation elements during the predefined period of time and a value of energy stored in the energy storage elements and providable during the predefined period of time, determining a value of energy available during a predefined period of time,
c) based on the said value of energy available and the said expected value of energy consumed, controlling in real-time the actual consumption of the energy consumption elements to adjust the actual value of energy consumed during the predefined period of time to the value of energy available in that period of time.

2. A method according to the previous claim wherein it further comprises defining sub-groups of elements part of the energy community, each sub-group comprising at least one energy providing element and one energy consumption element,
the method further comprising that a value of energy providable by at least one energy providing element of a first sub-group during a period of time is directly attributed to the consumption of an energy consumption element of the same first sub-group during a period of time,
wherein each element is provided in a different geographical location.

3. A method according to the previous claim wherein the elements constituting sub-groups change during a period of time.

4. A method according to any of the preceding claims wherein steps a) to c) are sequentially performed in real-time, whereby each step is performed immediately after the previous step.

5. A method according to any of the preceding claims wherein it further comprises the definition of a tariff associated with the providing of energy by the energy providing elements during a period of time.

6. A method according the previous claim wherein it further comprises the definition of a first tariff associated with the providing of energy by the energy providing elements of a first group during a period of time to energy consumption elements of the first group and the definition of a second tariff associated with the providing of energy by the energy providing elements of a second group during a period of time to energy consumption elements of the first second.

7. A method according to any of the claims 5-6 wherein it further comprises the definition of at least one energy generation tariff associated with energy provided and originated from one or more energy generation elements and of at least one energy storage tariff associated with energy provided and originated from one or more energy storage elements.

8. A method according to any of the preceding claims wherein the distance value is of 5 m, 20 m, 10 m, 50 m, 100 m, 500 m, 1 km, 2 km, 5 km, 10 km, 20 km or 30 km.

9. A method according to any of the preceding claims wherein it comprises
determining the expected value of energy providable by the energy providing elements during a predefined period of time and the expected value of energy consumed by the energy consumption elements during the predefined period of time based on
a history set of values of energy providable by the energy providing elements and of energy consumed by the energy consumption elements,
a number of energy providing elements and energy consumption elements, and
time and date,
and, optionally, wherein values of energy providable by the energy providing elements and of energy consumed by the energy consumption elements are directly obtained from energy meters associated with the energy providing elements and the energy consumption elements.

10. A method according to any of the preceding claims wherein
the expected value of energy providable by the energy providing elements during a predefined period of time,
the expected value of energy consumed by the energy consumption elements during the predefined period of time,
the value of energy available during a predefined period of time,
information on the control in real-time of the actual consumption of the energy consumption elements,
is stored locally, not being transmitted to a remote computational processor.

11. A method according to any of the preceding claims wherein controlling in real-time the actual consumption of the energy consumption elements to adjust the actual value of energy consumed during the predefined period of time to the value of energy available in that period of time
comprises defining a limit to the consumption of one or more of the energy consumption elements and/or shutting down the operation of one or more of the energy consumption elements.

12. A method for the local management of energy resources provided in a neighbourhood and thus defining an energy community, the method comprising implementing the method of any of the preceding claims in a computational system, the computational system comprising a one or more of processors and being provided within the neighbourhood.

13. A computational system for the management of energy resources provided in a neighbourhood, the system comprising computational means configured to implement the method of any of the claims 1-11 or the method of claim 12.

14. A computer program product comprising executable instructions for performing the method of any of the claims 1-11 or the method of claim 12.

15. A non-transitory storage media including program instructions executable to carry out the method of any of the claims 1-11 or the method of claim 12.
